# EUROPEAN PATENT APPLICATION

(11) **EP 4 386 616 A1**
(43) Date of publication of application: **19.06.2024**
(21) Application number: 22213320.9
(22) Date of filing: 14.12.2022
(51) Int. Cl.: G06F 40/30

(54) **VIRTUAL COMMUNICATION TECHNIQUES**

(71) Applicant: Deutsche Telekom AG, 53113 Bonn (DE)
(72) Inventor: Minow, Jascha, 64625 Bensheim (DE); El Mallouki, Said, 56329 St. Goar (DE); Jahn, Carl, 65191 Wiesbaden (DE)
(74) Representative: Braun-Dullaeus Pannen Emmerling Patent- & Rechtsanwaltspartnerschaft mbB

(57) **Abstract**

A method and system for virtual communication, in particular for language training, when using Internet-based communication services, comprising the following steps
• Providing communication content of a user's communication input;
• Providing a communication model on a computer unit;
• Passing the communication content to the communication model, wherein the communication model has a feedback routine that analyzes the communication content and calculates a communication score and generate a hint for the user with regard to a correct usage of the communication content if the communication score is below an adjustable level;
• Output of the hint on a terminal device of the user.

## Description

The invention relates to techniques to enable and/or to improve virtual communication of users.

The ongoing digitization of today's workplace has led to employees working and communicating a lot with services and/or apps - such as Slack, Mattermost, Zoom, Webex, etc.

Digitization also means that work teams are becoming increasingly international and exchanging information with each other in groups consisting of many different nations via the aforementioned communication services, for example.

This naturally leads to language barriers, as everyone usually communicates best in their native language.

Often the business language in large international groups is English, but there are of course also companies that use Spanish, French, Arabic and/or other languages. In many meetings held by these companies, people from different nations, for example Romania, India, Germany, the Netherlands, and other countries, sit together and communicate in one language if possible - usually English.

Due to the fact that the language used is generally not the native language of the participants, the language level among the participants is very heterogeneous. While one participant has excellent language skills due to stays abroad and advanced courses at school and university, the next participant's language skills are more rudimentary, acquired through self-study after high school and somewhat improved through practice.

Deficits also vary widely. Some people struggle with a lack of vocabulary in a particular area, others have difficulty with grammar or pronunciation. With the constant repetition of errors and the lack of correction by other participants, whether out of politeness or disinterest, successful communication often depends on context and the ability of other participants to make sense of it. The lack of time in our active and constantly busy society, in turn, prevents many from improving their language level professionally, for example by means of a course.

In the view of above, it is an object of the present invention to provide techniques to improve communications via online services and/or apps, and in particular to improve language skills of a user.

This object is solved by the features of the independent claims.

The features of the various aspects of the invention described below or the various examples of implementation may be combined with each other, unless this is explicitly excluded or is technically impossible.

According to the invention, a method for virtual communication, in particular communication training, when using an Internet-based communication service is disclosed, the method comprising the following steps.
- Providing communication content of a user's communication input, wherein the communication content is a copy from the communication of the user done via the Internet-based communication service;
   ∘ the communication input is a copy of the communication of the user with his interlocutor while the user uses the Internet-based communication service; Hence, the communication input is no text that is created for the purpose of language training that has the downside of being a kind of artificial for the user because those created communication inputs in the state of art (e.g. Babbel) do not know which topics are especially relevant for the user; However, if the communication input is a copy of an actual conversation of the user as according to the invention, it naturally fits perfectly to the user;
   ∘ communication training can be language training and/or body language training, etc., the communication content can include spoken language, a typed text, gestures, and/or facial expressions of a user and can be captured with suitable input means. A smartphone or tablet is usually technically equipped to capture video or images with a built-in camera, audio signals with a built-in microphone, and text input with a virtual keyboard via the display; other computer units may have appropriate peripherals, such as a webcam, microphone, and/or keyboard, connected as input means;
   ∘ the communication content can be captured, in particular, when the user communicates with other interlocutors via Internet-based communication services and/or apps (such as Zoom, Microsoft Teams, WebEx, WhatsApp, etc...); the provision can take place by transmitting this communication content in a data-conducting manner to the communication model described below;
- Providing a communication model on a computer unit and/or server;
   ∘ the communication model differs from a conventional speech model in that, in addition to speech, gestures and/or facial expressions can also be processed and analyzed by the communication model; in one embodiment, the communication model is a speech model;
   ∘ the communication model can be based on artificial intelligence, which in turn is based on a trained neural network; the neural network can be trained by communication experts by passing communication content as data to the neural network, which is marked as being correct or being incorrect, for example, so that the neural network can recognize, assess and classify corresponding communication patterns;
   ∘ in particular, a plurality of communication models comprising different languages, different performance levels, and/or different subject areas can be provided. In principle, it is also possible to combine the plurality of communication models into a single communication model, whereby a plurality of communication models brings performance advantages and, in particular, can be replaced and/or updated more easily;
   ∘ for transferring the communication content to the communication model, the communication content can be converted in an upstream process for later processing. For example, if the pronunciation is to be analyzed by the communication model, an audio signal can be transferred to the communication model as an audio signal. However, if vocabulary and/or sentence structure analysis is to be performed based on the audio signal, the audio signal can first be converted into text by means of a speech-to-text module; for this purpose, a conversion module can be provided that is implemented on the server and/or the computing unit;
   ∘ the communication model can also be called a virtual language trainer for the user;
- Passing the communication content to the communication model, wherein the communication model has a feedback routine that analyzes the communication content and calculates a communication score and generates a hint for the user with regard to a correct usage of the communication content if the communication score is below an adjustable level;
   ∘ the communication score is calculated because a user who communicates quasi-perfectly - for example, a native speaker - usually does not need any hints with regard to correct his usage of communication. However, the level can be adjusted, especially by users, so that even a native speaker receives hints regarding a correct usage of the communication. For example, it can be provided that the communication score results in a value between zero and 100, where the value 100 stands for perfect communication. If the user now enters the level 100, even a native speaker will receive the hints. The adjustable level thus has the technical effect of determining how often a user receives corresponding hints;
   ∘ here, the user's communication content can preferably be analyzed over a predefinable period of time, such as 1 hour and/or five DIN-A4 pages, so that a certain statistical certainty is achieved with regard to an adapted output of the hint. If, for example, only a single sentence of the user is analyzed, it may be that this one sentence does not correctly reflect the user's language capabilities;
- Output of the hint on a terminal device of the user.
   ∘ The user's terminal device as output means for the hint can correspond in particular to the input means of the communication content, but also deviate from it. For example, a screen and/or a loudspeaker is provided in particular as the output means of the hint. A typical terminal device, such as a smartphone, already has these components by default;
   ∘ the hints can be taken, in particular, from a database of hints provided, especially in the form of learning units.

The method therefore has the advantage that the user can communicate as before via the Internet-based communication services, apps, services, etc., while at the same time his communication is analyzed in the background with regard to possible improvements and he is provided with appropriate technical information via his terminal device so that he can improve his communication, in particular his language. According to the invention, all of this happens more or less casually and incidentally, without the user having to call up a special application for communication or language training specifically for this purpose. Another advantage is that the user is thereby improved with regard to his actual needs, since the underlying communication corresponds to his actual communication, since this is captured directly from his real conversations. Cooperation in international teams is improved because there are fewer communication misunderstandings.

In an advantageous embodiment, a plurality of communication models are provided, comprising communication modules in different languages, in different levels and/or further topic-based language modules, in particular on special thematic topics.

The advantage of having a plurality of communication models is that they can be trained in a targeted manner and updated more easily. In addition, a subset of the plurality of communication models can be selected for the user, which takes up less memory than an overall model that combines all communication models into one large model. If the communication model includes different languages, the user can improve his communication skills, especially his language skills, in multiple languages, such as German and English. The different levels reflecting different levels of proficiency in a language are advantageous to allow users to improve in a targeted manner based on their current level of proficiency. Topic-based language modules, especially in the respective languages, offer the advantage of being able to improve a user's communication in a targeted manner with respect to a specific topic area (such as the topic area of a lawyer, a doctor, ...). Preferably, a user-specific communication model is determined and assigned to the user.

This offers the advantage that the user-individual communication model is increasingly better tailored to the real needs or capabilities of the user, especially over time, and can improve the user in a much more targeted manner than a "generic" communication model. In particular, the user-individual communication model is selected with respect to the language used, and/or the subject area used. For example, if the user is conversing about voice assistant enhancement via the communication services in English - in this case, the user-individual communication model is selected so that it includes the English language module with the topic area of digital communication.

In one embodiment, the assignment of the user-individual communication model is based on an assignment score consisting of the following sub-scores:
- Transcription Score,
- Grammar Score,
   ∘ the grammar score is particularly suitable for selecting the appropriate language and level for the user-individual communication model;
- Intent and/or entity score,
   ∘ For this purpose, routines of known speech assistants can be used to determine the user's intents and/or entities. These are particularly helpful in determining a corresponding specific subject area. For example, if the user says a sentence such as "we have to treat the patient better with drug XY", the intent can be determined that it is about medical treatment and the special topic area "medicine" with its corresponding special vocabulary can be selected as a user-specific communication model.
- Vocabulary score, and/or
   ∘ the vocabulary score is particularly suitable for selecting the appropriate language and level for the user-individual communication model;
- Pronunciation Score.

The assignment score can result from a function that takes the individual sub-scores into account in a weighted manner. This weighting can in particular be set by the user and can advantageously lead to the fact that the user-individual communication model compiled and selected for him corresponds to his desired "communication goal". For example, whether the user wants to improve his communication in specific subject areas or his pronunciation or vocabulary.

In one embodiment, the user is classified into a specific language level based on the assignment score and/or the sub-scores.

This offers the advantage that users can receive advice on how to improve their communication according to their language level, which will neither underchallenge nor overchallenge them.

Multiple communication models can be assigned to the user. This offers the advantage that the user can improve his communication in parallel in several languages, for example. In particular, the user may communicate in English for business and Spanish with friends, for example, so he may want to improve both languages.

In one embodiment, the communication model is provided with communication contents of a conversation partner of the user, and that the hints are adapted to the communication contents of the conversation partner. In this case, it can be provided in particular that the interlocutor gives his or her one understanding in advance for this purpose. The communication contents of the interlocutor can also be recorded via the shared communication service using appropriate input means and made available to the communication model.

This has the particular advantage that it provides further information for selecting the most suitable user-individual communication model and/or adapting it. Communication content of the interlocutor can be particularly helpful to determine intents, entities and/or a vocabulary to be used in common.

The communication content of the interlocutor can also be used to determine which national background the interlocutor comes from. This can be particularly helpful if this national background considers certain words, gestures and/or a facial expression to be offensive or insulting. For example, the hints provided to the user may inform the user that the word "pajero" means something like "wimp" in Spanish. Such functionality might have prevented car manufacturer Mitsubishi from naming one of its SUVs "Mitsubishi Pajero." With the name Fiat Uno, Fiat intended to sell the model as the "number one" small car. In Finland, however, "Uuno" means "sucker."

Preferably, the hints represent a broadened vocabulary or a narrowed (convergent vocabulary) vocabulary. The representation of the broadened vocabulary has the advantage that the user learns more and more words, especially in everyday speech, and over time can ideally converse almost like a native speaker and accordingly understands much more.

Surprisingly, however, it can also be advantageous to present a narrowed vocabulary. This is especially the case for certain fields where it is important to be able to communicate "unambiguously" even internationally. For example, if lawyers are conversing in English and are mixing to complain about a court decision, it is important that they all correctly used the term "appeal" and not synonyms that may have a different meaning. Obviously, this is also important in the medical environment, for example, and many other specialties. The user is thus advantageously guided towards a uniform vocabulary of a particular field.

Preferably, input means for recording the communication content and/or the output means comprise a smartphone, a tablet, a computer, a screen, a camera unit, in particular a webcam, and/or a microphone. This makes it technically possible, in particular by a combination of the input means, to record communication content comprising both speech, text and/or facial expressions and gestures. When facial expressions and gestures are recorded by means of a camera unit, a person recognition module can be used to cut out the section of a video recording on which the user can be seen and make it available to the communication model. In order to be able to create hints regarding the gestures, background information that could also be visible on the image section next to the user is usually irrelevant, so that the section of the video recording in which only the user can be seen advantageously leads to a data reduction that does not impair the quality of the hint. Furthermore, a compression module can be used to additionally compress the video data and/or voice signal.

In one embodiment, an avatar guides the user in the form of the hint to perform gestures and/or facial expressions.

If the communication model determines that the user is making a gesture and/or facial expression that is perceived as offensive, misleading and/or objectionable in the context of the national background of the user's interlocutor, an avatar can be superimposed on the screen of the user's terminal device, in particular one that is invisible to the interlocutor if the screen is shared, to instruct the user in a guided human-machine interaction to make the correct facial expression and/or gesture. The thumbs-up gesture, for example, is completely unambiguous in this country as an expression of recognition and joy. In Canada, however, it is only used by hitchhikers. And who is in Afghanistan, Iran or Iraq, should use the gesture extremely sparingly, here it is equal to a bad insult. Turks could understand this hand signal as an invitation to sexual practices.

The avatar can also guide the user to correctly execute a gesture and facial expression based language for the deaf and dumb.

In one embodiment, the message is output after the communication and/or when an error score is exceeded in parallel with the communication. The communication model is set up to calculate the error score. The error score reflects the probability with which the user actually wanted to say something else. In particular, it is assumed that the user does not knowingly want to offend his conversation partner.

Outputting after communication has the advantage that the user can concentrate on the communication undisturbed. However, if the user says a word that is offensive in another language or makes a gesture that is offensive in another nationality, this is reflected in the error score. If the error score exceeds a predefined threshold, a message is displayed to the conversation partner in parallel with the communication, informing him that the user can correct himself or refrain from using the corresponding gesture/word in further communication.

In one embodiment, communication model is based on trained artificial intelligence. Or, in other words, in one embodiment, the communication model is formed as a trained artificial intelligence. The artificial intelligence built on a neural network can be trained with the following training data as explained below.

Speech signals, text inputs, and/or image data of facial expressions and/or gestures can be transferred to the neural network as input data for the training. During the input, these are marked accordingly so that the neural network can make a correct assignment "internally". For example, a text input can be transferred that is marked as "correct", for example by an expert, as English in the language level A1 in the subject area XY. This text input may be modified by an expert such that the modified text input has language errors and is also passed to the neural network and marked as "incorrect". This input is also marked as belonging to the certain language and subject area.

In principle, an analogous procedure can be used with speech signals and image data. The neural network of the artificial intelligence can be given a certain word with a correct pronunciation which is marked as "correct" and the same word in an incorrect pronunciation which is marked as "incorrect" as input data. The artificial intelligence neural network can be given an image or a video with a first gesture and/or a first facial expression marked as "correct" and a second gesture and/or a second facial expression marked as "wrong" against a certain national background.

The user's communication content can be transmitted to the appropriately trained artificial intelligence, and the artificial intelligence is able to generate hints that reflect correct use of the communication content.

According to a second aspect of the invention, a user terminal is disclosed that is arranged for virtual communication according to the method described above.

According to a third aspect of the invention, a virtual communication system, in particular a virtual language trainer, is disclosed, wherein the system is arranged to perform the method described above, and wherein the system comprises:
- at least one terminal of a user for receiving communication content of the user and/or for outputting hints for improved communication for the user,
- a server comprising
   ∘ a database with stored correct communication content;
      ▪ where this database can be integrated into a communication model implemented from the server,
   ∘ the implemented communication model, the communication model comprising a feedback routine arranged to analyze the communication contents and to calculate a communication score and to generate hints for the user for his terminal with regard to a correct usage of the communication if the communication score is below an adjustable level, the server being arranged to send the hints via a communication channel to the terminal;
- a data-carrying communication channel between the server and the terminal device.

With this system, the advantages according to the process can be realized technically.

In one embodiment, the system comprises an integration module, wherein the integration module is provided in the data-carrying communication channel between the server and the terminal. In particular, the integration module is set up to extract the communication content from various communication services and/or apps and forward this collected to the communication model, which is implemented in particular on a server in the cloud. The cloud-based variant has the advantage that the large volumes of data and high computing power required for the process can be provided centrally.

This has the advantage that, for example, by means of a plug-in, different communication services can uniformly use a single communication model. This is also particularly advantageous because a user usually uses various of these communication services, but a single communication model becomes more user-specific the more data is transferred to it.

In particular, it may be provided that the integration module (implemented on an integration server) and/or the server on which the communication model is implemented are designed as pass-through units, whereby the communication contents are forwarded to the corresponding communication services after the pass-through. This may create a small latency in the communication, but in this way a considerable data reduction is realized, since otherwise the data had to be duplicated in order to forward it to the integration server, the communication model and on the other side to the "active" communication service. If the pass-through units are provided at points in the core network through which data packets have to pass anyway, the latency generated by this is practically negligible. In order to technically implement any necessary rerouting, the IP addresses of the pass-through units can be made known to the terminals as an "intermediate station" in accordance with the protocol.

The system can also comprise copying means configured to create a copy from the communication of the user done via the Internet-based communication service as the communication content. This copying means can be implemented within the terminal device, and/or within the server. If the server is a throughput unit than it reduces data traffic, if the copying means are implemented within the server. The copying means can be configured to send the copy of the communication content to the communication model as input.

Providing communication content of a user's communication input, wherein the communication content is a copy from the communication of the user done via the Internet-based communication service;

In the following, preferred implementation examples of the present invention are explained with reference to the accompanying figure:

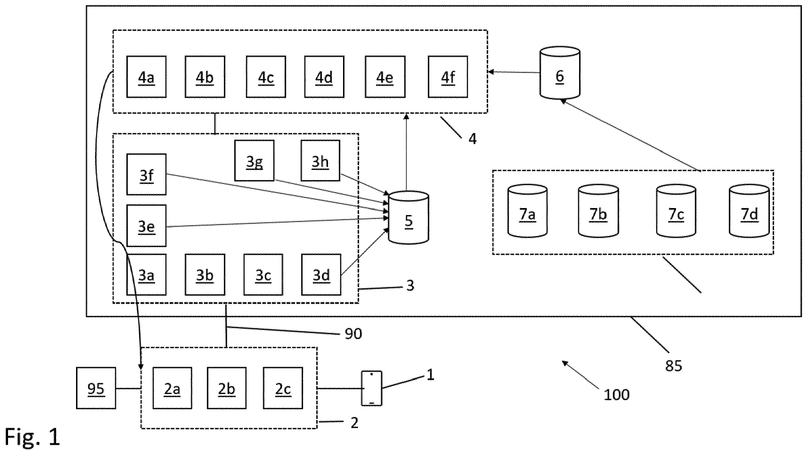

- Fig. 1:: shows an inventive system to enable an improved virtual communication;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

Fig. 1 shows a system 100 according to the invention for improved communication via Internet-based services and/or a virtual language trainer for a user.

The user can communicate with his terminal device 1, shown here as a smartphone 1, by means of Internet-based services, Internet-based services, and/or apps 2 a, b, c such as "Slack" 2a, "Webex" 2b, "Zoom" 2c, which are provided by providers 95. For this purpose, the system 100 has a communication link 90.

An integration of the improved communication via Internet-based services and/or the virtual language trainer for a user on the terminal device 1 can optionally be technically implemented via plug-in/app for the respective service 2 a, b, c used or completely on the server side, depending on the specifications of the provider. This has the effect that, when the services 2 a, b, c are used by the user, each communication input of the user is provided as communication content of an analysis of a communication model 85 described below via the communication connection 90. The communication 90 may be a fixed network connection (for example xDSL) and/or a mobile network connection (for example 5G) provided by a network provider.

The services 2 a, b, c are technically assigned to an integration server 2, in particular integrated on the integration server 2. The integration server 2 provides an interface for the terminal devices 1 and/or handles integration via cloud systems of the respective providers 95 of the services 2 a, b, c.

In principle, it is technically possible for the communication model 85 (or virtual language trainer 85) to be technically realized in its entirety as described above as an artificial intelligence based on trained neural networks.

However, the communication model 85 or virtual language trainer 85 may be modular and in this case include:
- an analysis and user scoring module 3, in particular an NLP analysis and user scoring module 3. The analysis and user scoring module 3 comprises:
   ∘ a speech-to-text unit 3a, an NLU unit 3b, an NGL unit, which process the transmitted communication content and transfer it to various analysis units 3d, e, f for evaluation, the analysis units 3d, e, f are designed in particular as artificial intelligence in the form of trained neural networks;
   ∘ (i) a basic analysis unit 3d for analyzing special sounds, accents, and/or prosody; (ii) a semantic analysis unit 3e, (iii) a grammar analysis unit 3f, (iv) a pronunciation analysis unit 3g, and/or (v) a body language analysis unit 3h;

The analysis units 3d-3h of the analysis and user scoring module 3 include language models for the respective course languages as well as various scoring models, which calculate a scoring of the communication contents on the basis of different criteria. Here, a transcribed text can be processed, as well as the intents can be determined. In parallel, the pronunciation, blind language and/or body language is analyzed on the basis of the audio transmission, if it is a video or telephone conference.

The content and grammatical analysis can be based on the following criteria:
a. Transcription score and Confidence score: Generates a baseline score for the correctness of the written or spoken communication content. Here it is agreed that a higher scoring value corresponds to better fluency;
b. Sentence Structure: Generates the score for the complexity of a sentence. Based on sentence length, number of syllables per sentence, syllables per word, sub-sentences;
c. Detected intents and entities and confidence score: Were intents/entities detected and how high is the confidence?
d. Generated summary of the last passage and confidence score: A summary is generated for the conversation, which is presented to the user as feedback. This is automatically translated into the user's primary language and then the two are matched for content.

The scores determined in the analysis and user scoring module 3 can be passed to a feedback routine implemented on a feedback module 4 of the communication model 85 (or virtual language trainer) 85, wherein the feedback routine generates hints for the user with respect to a correct usage of the communication content.

Feedback Module 4 may include the following units:
a. Body Language Feedback Unit 4a: An avatar is created that can display incorrect body language and/or correct body language on a screen; body language also includes a "language" for the deaf;
b. Vocabulary Feedback Unit 4b: Generates alternative suggestions for the vocabulary used in the current conversation based on the user's rating. Indexed material from a course database for the respective level is included, as well as an individual list of problem vocabulary (pronunciation, spelling) related to the user's current language level;
c. Conversation Rating Unit 4c: Calculates a scoring of the conversation based on i) complexity of sentences (number of words, syllables, word level (vocabulary), grammar, sub-sentences), ii) vocabulary used (level based on database), iii) errors in grammar and spelling, iv) pronunciation (for audio).
d. User rating unit 4d: Continuously adjusts the user's language level rating. This is done by taking the conversation rating and calculating an averaged value over a longer period. This should increase over a longer period of time as the user's skills are trained through active communication.
e. Typography and Grammar Check Unit 4e: Checks spelling and grammar usage. Words and structures that are incorrectly used or spelled are added by the system to an individual training list that is reused in Body Language Feedback Unit 4a, Vocabulary Feedback Unit 4b, and User Assessment Unit 4d. This allows the selection of suitable material during ongoing support, which is presented to the user as a hint (synonyms, samples).
f. Pronunciation Feedback & Samples Unit 4f: Generates clues based on pronunciation analysis and searches for samples from the database based on phonetic similarity that train a particular pronunciation and plays them back to the user. The following criteria adapted for the particular language are included in the analysis: i) word and sentence accent (emphasis), ii) sentence melody (rising, falling, etc.), iii) speech tempo, iv) speech pauses v) speech rhythm.

The analysis and user scoring module 3 can pass data to a user profile module 5. The user profile module 5 is a repository for all user data generated in the process. So language level classification, vocabulary trainer, pronunciation, etc. This user-specific information can be passed from the user profile module 5 to the feedback module 4 and taken into account when generating the hints.

A course database module 6 has level-related course data and language as well as analysis models. These are generated from source materials suitable for all levels and languages. This information can be transferred from the course database module 6 to the feedback module 4 and taken into account when generating the hints.

The course database module 6 is in a connection with a course data generator module 7. The course data generator module 7 points to literature 7a, dictionaries 7b, course material 7c, language samples 7d.

The course database module 6 reads in material from various sources and generates the course data and models that serve as a basis for further steps. In addition to dictionaries, specific course content for the respective language levels is also used, so that a classification into the respective level is possible. This makes it possible, for example, to determine the amount of vocabulary a learner should have at level A2 and which grammar rules can be assumed at this point. In addition, various speech samples are read in, which allow an analysis of the pronunciation. By means of appropriate tagging and transliterations, it is possible to identify and check language-specific sounds such as the th in English or the 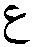 or 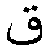 in Arabic.

The modules of the communication model 85 or virtual language trainer 85 described above may be implemented centrally on a single server in the cloud but also different distributed servers.

In general, in order to assess the level of knowledge, a reference for the respective levels is needed. The database for this is created through the preparation and reading of appropriate teaching material for the different levels: Vocabulary, complexity, sentence structure and grammar are taken into account and processed accordingly in order to extract teaching material for appropriate suggestions and further information.

For this purpose, the user's communication in the respective language is logged and analyzed over a longer period of time. Spelling correction, grammatical analysis as well as complexity and length of sentences, size of vocabulary, repetitions. The way the user enters the text or the pronunciation is also taken into account, as well as the speed of the input and the context in the conversation. Based on the results of this initial analysis, a classification is made for the language level A1 to C2. In addition, the technical context in which a user operates is identified, e.g. medical personnel, software development, patent law, etc. These parameters are incorporated into the personal user profile. These parameters are incorporated into the personal user profile and are then used to automatically optimize the teaching assistant.

The assessment of the user's pronunciation is based on the phonetic analysis of the teaching materials. For this purpose, the phonetic representation is read in and combined with pronunciation samples to enable classification into phonemes and matching with the user's pronunciation.

The communication model examines each user input before it is submitted and actively alerts the user to errors. Suggestions for improvement are also made so that the user can choose a suitable alternative. In addition, the assistant offers further information on the respective error so that the user can educate himself accordingly. Each error leads to a corresponding entry in the user's personal profile, which influences a weighting for a particular topic. If a vocabulary word has been misspelled or used incorrectly, it is added to a list so that the user can correct it at a later time. If the user uses certain vocabulary too often, the assistant will suggest pseudonyms to train the user's linguistic versatility.

In video and audio meetings, the virtual language trainer, i.e. the communication model, will continuously transcribe the user's communication and subject it to the same analysis process as in written communication. Only the feedback on the conversation will be summarized here, as a rule, only after the meeting, so that the user is not impaired in his activity. In addition, an analysis of the pronunciation will take place, in which attention will be paid to special features of the respective language. In Arabic, for example, the pronunciation of the sound 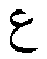 compared to the sound 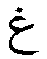 is given special attention, as is the difference between 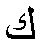 and 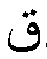 . In French, for example, attention is paid to the correct pronunciation of the different accents, and in English the 'th' might be a factor that is particularly relevant for pronunciation. For this purpose, the system uses a graphical sound display and highlights the individual phonemes accordingly.

So that the user gets a possibility for self-control. The division into phonemes also serves the automatic recognition of the pronunciation with the help of corresponding recordings of the words by native speakers as a reference, which have been tagged accordingly to pronunciation-relevant phonemes. This makes it possible to give the user direct feedback on pronunciation.

By using the system, the user's language level changes over time. To take this into account, the system continuously analyzes the language skills based on the input parameters described and adjusts the support accordingly in each case.

Use of various teaching materials for the different levels: In order to obtain a "baseline" for the classification of the language levels and the selection of vocabulary and teaching suggestions suitable for the respective language level, different teaching materials for the respective levels are read in for the training of the teaching assistant for the respective language. For example, for level A1, a vocabulary base is determined that should be known, and a maximum and average complexity score is determined for the sentences that are common at this level. On the basis of these, the models are trained, which perform the classification into a certain language level. The selection of improvement suggestions is based on the internal models of the language levels, as well as the continuous increase of the teaching level, with the corresponding improvement of the user.

Since the rough subdivision into A1 to C2 is not sufficient for this, a level score is calculated internally, which allows a division into 100 steps for the respective language level. In this way, for example, a user who is in the A2 language level with a score of 70 can already receive options from the B2 level, so that the transition between the levels is as smooth as possible for the user.

As more and more people communicate with each other in meetings every day in various ways in foreign languages, the solution offers a way to use this time to improve one's skills in terms of the language used and/or to improve the communication of such meetings. In other words, an artificial intelligence-based language trainer that "plugs in" to conversations as a plugin for various communication services such as Slack or Zoom and actively improves the user's language skills.

## Claims

1. Method for virtual communication, in particular for language training, when using an Internet-based communication service, comprising the following steps
• Providing communication content of a user's communication input, wherein the communication content is a copy from the communication of the user done via the Internet-based communication service;
• Providing a communication model on a computer unit;
• Passing the communication content to the communication model, wherein the communication model has a feedback routine that analyzes the communication content and calculates a communication score and generate a hint for the user with regard to a correct usage of the communication content if the communication score is below an adjustable level;
• Output of the hint on a terminal device of the user.

2. The method according to claim 1, **characterized in that** a plurality of communication models is kept available, comprising language modules in different languages, in different stages and/or further topic-based language modules, in particular on special topics.

3. The method according to one of the preceding claims, **characterized in that** a user-individual communication model is determined and assigned to the user.

4. The method according to claim 3, **characterized in that** the assignment of the user-individual communication model is based on an assignment score composed of the following sub-scores:
• Transcription Score,
• Grammar Score,
• Intent and/or entity score,
• Vocabulary score, and/or
• Pronunciation Score.

5. The method according to claim 4, **characterized in that** the user is classified into a certain language level on the basis of the assignment score and/or the sub-scores.

6. The method of any one of claims 2 to 5, wherein multiple communication models are assigned to the user.

7. The method according to any of the preceding claims, wherein communication contents of an interlocutor are transferred to the communication model, and that the hints are adapted to the communication contents of the interlocutor.

8. The method according to any one of the preceding claims, wherein the indicia represent a broadened vocabulary or a narrowed vocabulary.

9. The method according to any one of the preceding claims, wherein input means for capturing the communication content and/or the output means comprise a smartphone, a tablet, a computer, a screen, a camera unit and/or a microphone.

10. The method according to any one of the preceding claims, wherein an avatar guides the user in the form of the hint to perform gestures and/or facial expressions

11. The method according to any one of the preceding claims, wherein the hint is output in parallel with the communication after the communication and/or when an error score is exceeded.

12. The method of any one of the preceding claims, wherein the communication model is based on a trained artificial intelligence.

13. A user terminal for virtual communication adapted to perform the method of claim 1.

14. A system for virtual communication adapted to carry out the method of claim 1, comprising
• at least one terminal of a user for receiving communication content of the user and/or for outputting hints for communication to the user,
• a server comprising
∘ a database with stored communication content;
∘ an implemented communication model, the communication model comprising a feedback routine arranged to analyze the communication contents and to calculate a communication score and to generate hints for the user for his terminal regarding a correct use of the communication if the communication score is below an adjustable level, the server being arranged to send the hints via a communication channel to the terminal;
• a data-carrying communication channel between the server and the terminal device.

15. The virtual communication system of claim 14, comprising an integration module provided in the data-carrying communication channel between the server and the terminal.
